# FASCICULE DE BREVET EUROPEEN

(11) **EP 3 760 648 B1**
(45) Date de publication et mention de la délivrance du brevet: **24.11.2021**
(21) Numéro de dépôt: 20183480.1
(22) Date de dépôt: 01.07.2020
(51) Int. Cl.: C08B 37/08, C08L 5/08, C08L 95/00

(54) **OLIGOMÈRE BIOSOURCÉ ISSU DU CHITOSAN ET SON UTILISATION COMME ÉMULSIFIANT CATIONIQUE OU NON IONIQUE D'ÉMULSION AQUEUSE DE LIANTS BITUMINEUX OU NON BITUMINEUX**
BIOBASIERTES OLIGOMER, DAS AUS CHITOSAN HERVORGEHT, UND SEINE VERWENDUNG ALS KATIONISCHES ODER NICHT-IONISCHES VERDICKUNGSMITTEL EINER WÄSSRIGEN EMULSION VON BITUMINÖSEN ODER NICHT-BITUMINÖSEN BINDEMITTELN
BIOSOURCED OLIGOMER FROM CHITOSAN AND USE THEREOF AS A CATIONIC OR NON-IONIC EMULSIFIER OF AQUEOUS EMULSION OF BITUMINOUS OR NON-BITUMINOUS BINDERS

(30) Priorité: 01.07.2019 FR 1907288
(43) Date de publication de la demande: 06.01.2021
(73) Titulaire: COLAS, 75015 Paris (FR); Ecole Nationale Supérieure de Chimie de Montpellier, 34090 Montpellier (FR); Université de Montpellier, 34090 Montpellier (FR); Centre National de la Recherche Scientifique, 75016 Paris (FR)
(72) Inventeur: CHAPELLE, Camille, 34070 Montpellier (FR); DESROCHES LE FOLL, Myriam, 91440 Bures Sur Yvette (FR); DURAND, Graziella, 78460 Chevreuse (FR); DAVID, Ghislain, 34070 Montpellier (FR); NEGRELL, Claire, 34130 Mudaison (FR); CAILLOL, Sylvain, 34090 Montpellier (FR); FAYE, Ibrahima, 06130 Grasse (FR)
(74) Mandataire: Jacobacci Coralis Harle

(56) Documents cités:
- EP-A1- 2 289 946
- WO-A1-2008/136773
- MALLAWARACHCHI D R ET AL: "Suitability of Chitosan as an emulsifier for cationic bitumen emulsions and its behaviour as an additive to bitumen emulsion", CONSTRUCTION AND BUILDING MATERIALS, ELSEVIER, NETHERLANDS, vol. 102, 30 octobre 2015 (2015-10-30), pages 1-6, XP029322545, ISSN: 0950-0618, DOI: 10.1016/J.CONBUILDMAT.2015.10.111

## Description

L'invention concerne d'une manière générale un oligomère agro-ressourcé dérivé du chitosan utilisable notamment en tant que tensioactif à faible impact environnemental pour la fabrication d'émulsions de liants bitumineux ou de liants de synthèse, et leur utilisation pour la réalisation de matériaux pour le bâtiment et/ou les travaux publics, et en particulier des matériaux pour confectionner des couches et/ou revêtements de construction routière et/ou de génie civil, de produits de marquage ou de produits d'étanchéité ou d'isolation.

De nos jours, les émulsions de liant bitumineux ou non bitumineux sont grandement utilisées pour l'entretien et le façonnage des chaussées. Celles-ci sont principalement faites de liant organique et d'une phase aqueuse contenant un tensioactif. Celui-ci est alors à l'interface entre les phases huileuses et aqueuses. Les tensioactifs utilisés actuellement sont bien souvent des composés aminés étiquetés comme toxiques et/ou écotoxiques. Il est donc important de rechercher à remplacer ces composés par une gamme de produits moins dangereux et en meilleur accord avec l'environnement, notamment dans le cadre de leur transport et de leur stockage.

Les polyamines, imidazolines et amido-amines grasses employées classiquement dans les émulsions de liant sont généralement classées GHS05 « corrosif / irritant » et GHS09 « dangereux pour l'environnement ». Il est souhaitable, lorsque cela est possible, de réduire le risque pour l'homme et l'environnement de ces produits chimiques, dans le cas d'une utilisation courante par les équipes opérationnelles ou d'un déversement accidentel lors du transport par exemple. Même en cas d'utilisation de ressources renouvelables, certains tensioactifs présentent des risques chimiques pour l'homme et l'environnement peu satisfaisants si les principes de la chimie verte sont considérés.

Il existe quelques tensioactifs biosourcés adaptés aux techniques routières.

La demande FR 2971511 présente un émulsifiant amphotère biosourcé à hauteur de 83 % à base d'ester gras de proline et présentant une biodégradabilité supérieure à 90 % selon la méthode OCDE 301, non toxique et non écotoxique. Cette invention nécessite la présence d'un co-tensioactif pour réaliser des émulsions satisfaisantes.

La demande FR 2972191 présente un émulsifiant non ionique ou cationique d'origine naturelle comprenant des mono et di-esters d'acide gras et du polyglycérol permettant de réaliser des émulsions de bitume.

Ces deux inventions ne sont pas suffisamment adaptées au travail avec des émulsions cationiques, particulièrement utilisées en Europe.

Les demandes WO 2009/150369 et FR 2927628 permettent d'obtenir un tensioactif cationique à base de ressources renouvelables (alcools gras et sels de bétaïne), mais ce tensioactif ne possède qu'une fonction ammonium quaternaire, qui présente moins de performance que les amines dans les applications routières, notamment en termes d'adhésivité.

Il existe également des bio-tensioactifs non ioniques émulsifiants du bitume de nature saccharidique appelés glycosides d'alkyle tels que les APG (Alkylpolyglycosides) ou APP (Alkylpolypentosides) issus respectivement de la réaction glucose/alcool gras et pentose/alcool gras. La demande FR 2731709 décrit par exemple l'utilisation de ces APG comme co-tensioactifs pour des formulations anioniques de bitume. La demande WO 2008/135646 décrit également des compositions tensioactives comprenant majoritairement un glycoside d'alkyle. Ces compositions comprennent également comme composé minoritaire un ester gras d'acide aminé dont l'une des fonctions est d'améliorer la stabilité des compositions tensioactives. Ces deux inventions ne sont donc pas adaptées aux émulsions cationiques.

En résumé, des émulsifiants pour émulsions de bitume préparés à partir de la biomasse existent. Cependant, une bonne partie regroupe des tensioactifs anioniques non adaptés aux émulsions cationiques qui sont les plus utilisées en Europe. Des tensioactifs cationiques existent mais certains ne sont pas 100% biosourcés et d'autres ne possèdent pas les fonctions chimiques requises pour permettre une adhésivité suffisante. Il en découle qu'un tensioactif à base d'amines 100% biosourcées serait en accord avec les exigences reliées aux émulsions cationiques tout en respectant l'environnement.

Un polymère pouvant répondre à cette problématique est le chitosan qui est un polysaccharide naturel possédant des fonctions amines primaires sur une grande partie de sa chaîne. Le chitosan est un biopolymère non toxique dérivant de la chitine qui est un constituant de la carapace des crustacés (crabes, crevettes), de la paroi de certains champignons et qui est également présent dans la carapace de certains insectes.

La publication D. R. Mallawarachchi et al., Suitability of chitosan as an emuslifier for cationic bitument emulsions and its behavior as an additive to bitumen emulsion. Constr. Build. Mater. 102, (2016), 1-6 décrit l'utilisation de chitosan dans une émulsion de bitume huile dans eau et révèle qu'il possède un caractère épaississant. Cependant, son caractère émulsifiant n'est pas mis en valeur puisque plus il y a de chitosan utilisé en remplacement d'un tensioactif classique de type amine dans l'émulsion, moins celle-ci est stable dans le temps.

Quelques travaux décrivent la modification chimique du chitosan et son utilisation en tant que tensioactif dans le domaine de l'encapsulation médicamenteuse.

Les publications P. Ramalingam, et al., Improved oral delivery of resveratrol from N-trimethyl chitosan-g-palmitic acid surface-modified solid lipid nanoparticles, Colloids Surfaces B Biointerfaces 139, 52-61 (2016) et I. F. Uchegbu et al. Polymeric chitosan-based vesicles for drug delivery, J. Pharm. Pharmacol. 50, 453-458 (1998) décrivent le greffage de chaînes d'acide palmitique par acylation du chitosan en utilisant respectivement de l'acide palmitique et de l'acide N-hydroxysuccinimide palmitique.

La publication J. Desbrières, et al., Hydrophobic derivatives of chitosan: Characterization and rheological behavior, Int. J. Biol. Macromol. 19, 21-28 (1996) décrit quant à elle l'alkylation du chitosan en utilisant des aldéhydes plus ou moins gras.

La publication N. Illy, et al., Synthesis of Water-Soluble Allyl-Functionalized Oligochitosan and Its Modification by Thiol-Ene Addition in Water, J. Polym. Sci., Part A: Polym. Chem. 2014, 52, 39-48 décrit la fonctionnalisation d'oligomères de chitosan par des thiols portant des groupes terminaux polaires alcool, acide carboxylique, ester ou amino.

La publication B. H. L. Oh et al., Modified chitosan emulsifiers: small compositional changes produce vastly différent high internai phase emulsion types, J. Mat. Chem. B, 3, 4118 (2015) décrit le greffage d'oligomères N-isopropylacrylamide et d'oligomères de lysine de différentes tailles sur du chitosan avec de faibles degrés de substitution pour créer des émulsions de p-xylène huile dans eau.

La publication S. Bratskaya et al., Enhanced flocculation of oil-in-water emulsions by hydrophobically modified chitosan derivatives, Colloids Surf. A: Physicochem. Eng. Asp., 275, 168-176 (2006) montre le pouvoir floculant de composés du chitosan modifiés par ajout de fonctions hydrophobes, issus d'une réaction du chitosan avec des aldéhydes en C12, dans des émulsions huile dans eau stabilisées ou non par du SDS.

Ces publications montrent que le chitosan modifié par greffage de chaînes alkyles sur son atome d'azote possède des propriétés de tensioactif limitées. En effet, la stabilité des micelles formées est insuffisante, le greffage ne permettant d'obtenir que de faibles degrés de substitution, et donc une partie hydrophile du tensioactif beaucoup plus conséquente que sa partie lipophile. De plus, si la concentration en chitosan modifié est trop élevée, celui-ci, du fait de la génération de nombreuses liaisons hydrogènes, peut présenter l'inconvénient d'entraîner une gélification du milieu.

Pour pallier ces inconvénients, il est nécessaire de développer de nouveaux émulsifiants plus efficaces, robustes, issus de ressources renouvelables, non toxiques, et non polluants, de façon à minimiser le risque chimique. L'émulsifiant se doit de posséder des fonctions amines libres (ou ammonium) si l'on souhaite préparer des émulsions cationiques.

L'objectif est également de préparer des émulsions de liant bitumineux ou non bitumineux stabilisées par un tel émulsifiant, pour des applications principalement routières ou liées au génie civil.

Les buts ci-dessus sont atteints selon l'invention par un oligomère biosourcé obtenu par fonctionnalisation d'un oligomère de chitosan de façon à ce qu'il comprenne des unités monomères de formule A ou l'un de leurs sels : 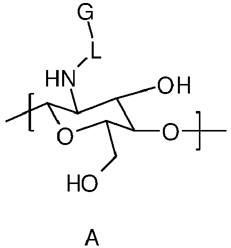 où L désigne un groupe divalent et G désigne une chaîne alkyle grasse comprenant de 5 à 30 atomes de carbone, éventuellement substituée, saturée ou insaturée.

Dans la présente demande, le terme "biosourcé" désigne des matériaux ou composés issus de la biomasse d'origine végétale ou animale. Ces matières premières présentent l'avantage d'être renouvelables.

Par oligomère, on entend une molécule constituée d'un nombre fini d'unités monomères, allant de 2 à 500, couplées ou réticulées ensemble de façon covalente.

Les inventeurs ont développé un nouvel émulsifiant de type tensioactif, dont la préparation par fonctionnalisation d'oligomères du chitosan va tout d'abord être décrite.

Le chitosan est un polyoside composé de la distribution aléatoire de D-glucosamine liée en β-(1-4) (unité désacétylée) et de N-acétyl-D-glucosamine (unité acétylée). Il peut être représenté de façon simplifiée comme suit (les unités D-glucosamines peuvent également être protonées) :

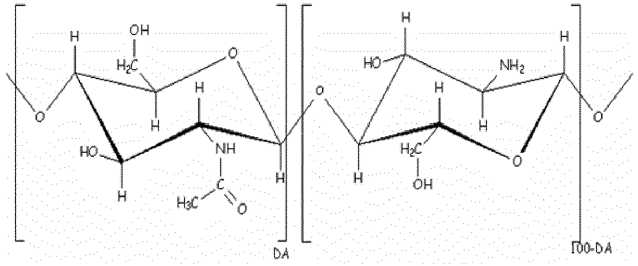

Il est caractérisé par des degrés d'acétylation variables, généralement inférieurs à 50 %. Le degré d'acétylation (noté DA) est le pourcentage d'unités acétylées par rapport au nombre d'unités totales de la chaîne.

Le chitosan précurseur des oligomères selon l'invention possède généralement une masse molaire variant de 30.000 à 1.500.000 g/mol, de préférence de 150.000 à 500.000 g/mol. Son degré de polymérisation varie de préférence de 200 à 2000.

Le nombre d'unités monomères des oligomères selon l'invention varie généralement de 2 à 50 ou de 2 à 30, de préférence de 4 à 20 ou de 5 à 20, de préférence encore de 4 à 15, mieux de 4 à 10 ou de 5 à 10.

Pour obtenir de tels oligomères à partir du chitosan, il est nécessaire de lui faire subir dans une première étape une réaction de dépolymérisation de façon à réduire son degré de polymérisation.

La dépolymérisation du chitosan peut être effectuée en utilisant différentes méthodes bien connues et est généralement conduite en milieu acide, idéalement à un pH variant de 4,5 à 5,5 afin d'obtenir sa solubilisation. On peut citer notamment une dépolymérisation par irradiation aux micro-ondes, par action de peroxyde d'hydrogène qui peut être combinée à l'utilisation de micro-ondes, par hydrolyse acide, ou par désamination à l'acide nitreux en présence d'acide (acide acétique, acide chlorhydrique ou autre) pendant 1 à 72h à des températures allant de 0 à 80°C. Cette dernière méthode est décrite par exemple dans K. Tømmeraas et al. Carbohydrate Research 333 (2001) 137-144. D'autres méthodes de dépolymérisation du chitosan peuvent être employées, notamment les méthodes thermiques et enzymatiques.

Les oligomères obtenus, nommés oligochitosans, ont de faibles masses molaires, sont nettement plus solubles en phase aqueuse (pour des pH > 6) que le chitosan et de ce fait, plus réactifs et facilement fonctionnalisables par greffage de chaines grasses. Ils permettent d'atteindre des degrés de substitution suffisants pour avoir des émulsifiants efficaces, et entraînent une moindre viscosité. En comparaison, le chitosan natif est seulement soluble dans l'eau en milieu acide, et de manière très limitée en de faibles concentrations du fait de son haut poids moléculaire et de la génération d'un plus grand nombre de liaisons hydrogène, très encombré stériquement, et donc difficile à fonctionnaliser.

Dans une seconde étape, les oligochitosans sont fonctionnalisés par greffage d'une chaîne grasse, hydrophobe et lipophile, pour conduire à l'oligomère présentant des propriétés de tensioactif selon l'invention. La fonctionnalisation chimique porte sur l'atome d'azote de certaines (au moins une) ou de la totalité des unités D-glucosamine du chitosan.

L'oligomère utilisé dans la présente demande comprend des unités monomères suivantes de formule A ou leurs sels :

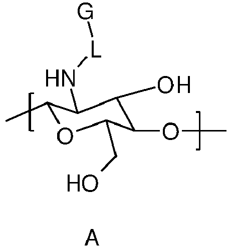

Il est obtenu par fonctionnalisation de l'oligomère de chitosan de façon à ce qu'il comprenne de telles unités monomères.

L'oligomère selon l'invention comporte donc un squelette chitosan et comprend des unités monomères A (identiques ou différentes, de préférence identiques, de préférence de une à 50, mieux de 2 à 10, sous forme neutre ou protonée), éventuellement des unités D-glucosamine B dans le cas où la fonctionnalisation du chitosan n'a pas porté sur toutes les unités D-glucosamine (de préférence de une à 50, mieux de 3 à 15, sous forme neutre ou protonée), et éventuellement des unités N-acétyl-D-glucosamine C si le degré d'acétylation n'est pas nul (de préférence moins de 30, mieux moins de 15, 10, 5, 3 ou 2) :

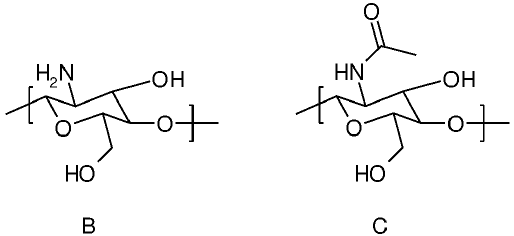

Dans un mode de réalisation préféré, l'oligomère selon l'invention comprend au moins une unité monomère de formule B ou l'un de ses sels, de façon à ce qu'au moins une fonction amine libre (ou ammonium) soit présente sur la partie hydrophile de l'oligomère. Ceci est préférable pour disposer d'un tensioactif présentant de meilleures propriétés d'adhésivité. En effet, le tensioactif peut dans ce cas interagir notamment avec des charges minérales de granulats, ce qui ne serait pas le cas avec des fonctions amines acétylées ou sous forme d'ammonium quaternaire.

Dans un autre mode de réalisation, l'oligomère biosourcé selon l'invention contient uniquement des unités monomères de formule A ou l'un de leurs sels, identiques ou différentes, de préférence identiques.

D'autres unités monomères que celles qui viennent d'être citées peuvent éventuellement être présentes dans l'oligomère selon l'invention. En particulier, certains groupes amino du chitosan peuvent être fonctionnalisés par d'autres réactifs que ceux conduisant aux unités monomères A, par exemple par des acides ou diacides carboxyliques non gras. On peut citer notamment les unités monomères dans lesquelles le groupe amino du chitosan a subi une fonctionnalisation par N-carboxyalkylation, notamment une N-carboxyméthylation ou une N-carboxybutylation. L'introduction de ces différentes fonctions chimiques sur le chitosan est connue de l'homme du métier.

Les unités monomères de formules A, B (ou leurs sels) et C sont généralement réparties de façon aléatoire dans la structure de l'oligomère biosourcé selon l'invention, mais peuvent aussi être présentes sous forme de blocs.

Les unités monomères A ou leurs sels sont présentes dans la structure de l'oligomère selon l'invention dans des proportions variant généralement de 10 à 70 %, par rapport au nombre total d'unités monomères, mieux de 12 à 50 % et encore mieux de 15 à 30 %.

Les unités monomères D-glucosamine B ou leurs sels sont présentes dans la structure de l'oligomère selon l'invention dans des proportions variant généralement de 20 à 80 % par rapport au nombre total d'unités monomères, mieux de 40 à 75 % et encore mieux de 50 à 70 %.

Les unités monomères N-acétyl-D-glucosamine C sont présentes dans la structure de l'oligomère selon l'invention dans des proportions variant généralement de 0 à 50 % par rapport au nombre total d'unités monomères, mieux de 0 à 30 % ou de 5 à 40 % et encore mieux de 10 à 30 %. Dans certains modes de réalisation, cette proportion d'unités monomères C (correspondant au taux d'acétylation DA de l'oligomère selon l'invention) varie de 0 à 10 % ou est nulle.

Typiquement, un oligomère selon l'invention contient 35-65 % d'unités monomères B ou leurs sels, 15-25 % d'unités monomères A ou leurs sels et 15-45 % d'unités monomères C, en nombre.

Le ratio nombre d'unités monomères de formule A ou leurs sels / nombre d'unités monomères de formule B ou leurs sels présentes dans la structure de l'oligomère selon l'invention varie de préférence de 20/80 à 60/40, mieux de 25/75 à 50/50 et encore mieux de 30/70 à 40/60.

L'oligomère selon l'invention, lorsqu'il comporte des groupes amino non fonctionnalisés, peut être utilisé sous forme neutre (NH₂) ou sous forme de sel (NH₃⁺), notamment sous forme de sel d'acétate, lactate, glutamate, gluconate, chlorhydrate ou pyrrolidone carboxylate.

Son taux d'hydratation est de préférence inférieur ou égal à 30 % en masse, mieux inférieur ou égal à 15 % en masse. Sa masse molaire varie généralement de 500 à 35.000 g/mol, de préférence de 600 à 10.000 g/mol, mieux de 700 à 5000 g/mol ou de 750 à 3000 g/mol.

Dans les unités monomères de formule A ou leurs sels, G désigne une chaîne alkyle grasse comprenant de 5 à 30 atomes de carbone, éventuellement substituée, saturée ou insaturée, linéaire ou ramifié, de préférence de 10 à 25 atomes de carbone, mieux de 12 à 20 ou de 10 à 18 atomes de carbone.

Dans un mode de réalisation, G est une chaîne alkyle linéaire de formule CₙH₂ₙ₊₁, n désigne un entier naturel, variant de préférence dans les proportions indiquées ci-dessus.

Le terme "alkyle" signifie dans la présente demande un radical hydrocarboné linéaire ou ramifié, saturé ou insaturé, ayant de préférence de 5 à 30 atomes de carbone (« alkyle gras »), incluant notamment les groupes acycliques tels que les groupes n-hexyle, n-octyle, oléyle, cétyle, myristyle, béhényle, lauryle, hexadécyle, octadécyle ou stéaryle. Le groupe alkyle peut également désigner les groupes cycloalkyle et les groupes cycloalkylméthyle.

Un exemple de chaîne alkyle grasse insaturée G est la chaîne -(CH₂)₇-CH=CH-CH₂-CH=CH-CH₂-CH=CH₂, par exemple la chaîne (8Z,11Z)-pentadéca-8,11,14-triényle que l'on retrouve notamment dans le cardanol.

Par groupe "alkyle substitué," on entend un groupe alkyle tel que défini ci-dessus, connecté par l'intermédiaire d'un atome de carbone sp³ et substitué par un ou plusieurs groupes aryle et/ou comprenant un ou plusieurs hétéroatomes tels que N, S ou O. Le groupe alkyle substitué peut notamment comporter des fonctions cétone, aldéhyde, ester, éther, hydroxyle ou amide. On citera à titre d'exemples les groupes arylalkyle, les groupes alcoxyalkyle, les groupes CH₂CO₂R¹¹, dans lesquels R¹¹ représente un groupe alkyle éventuellement substitué ou aryle.

L'oligomère selon l'invention peut comprendre des unités monomères de formule A ou leurs sels différant notamment par la nature de leurs chaînes grasses G, notamment lorsque ces chaînes grasses sont apportées par des réactifs issus de ressources renouvelables, comme les huiles de soja, colza, coco, coprah ou le tallol (tall oil), qui comportent un mélange d'acides gras porteurs de chaînes grasses différentes.

Les groupes divalents L, qui jouent le rôle de groupes espaceurs pour les groupes G, désignent de préférence des groupes carbonyle, carboxy, amido (-NHC(O)-), arylène, cycloalkylène, alkylène, alkylènecarbonyle, alkylènecarboxy, alkylènecarboxamido, alkylènoxy ou alkylènethia éventuellement substitué par un groupe hydroxyle (notamment le groupe - OCH₂CH(OH)CH₂-), alkylène-arylène, alkylène substitué par un groupe hydroxyle, ou une combinaison de ceux-ci. Le groupe L peut également être un groupe de nature hétérocyclique. Ces groupes peuvent être linéaires ou ramifiés, contenir un ou plusieurs hétéroatomes ou groupes fonctionnels, et contiennent de préférence de 2 à 16 atomes de carbone, mieux de 3 à 8 atomes de carbone. Ils sont liés à l'atome d'azote de l'unité glucosamine par l'intermédiaire d'un atome de carbone. Dans le cas où une chaîne grasse est directement greffée sur une fonction amine libre, notamment par N-alkylation, il est considéré que le groupe divalent L est réduit à l'atome de carbone qui assure la connexion à l'atome d'azote et à tous les substituants qu'il porte, par exemple un groupe divalent méthylène CH₂.

Lorsque le groupe L est un groupe cyclique, aromatique ou non aromatique, notamment hétérocyclique, il peut comporter une ou plusieurs chaînes alkyle grasses G.

Des exemples de groupes L utilisables dans la présente invention sont indiqués sur le schéma ci-dessous, où ils sont représentés sous forme connectée avec le groupe G :

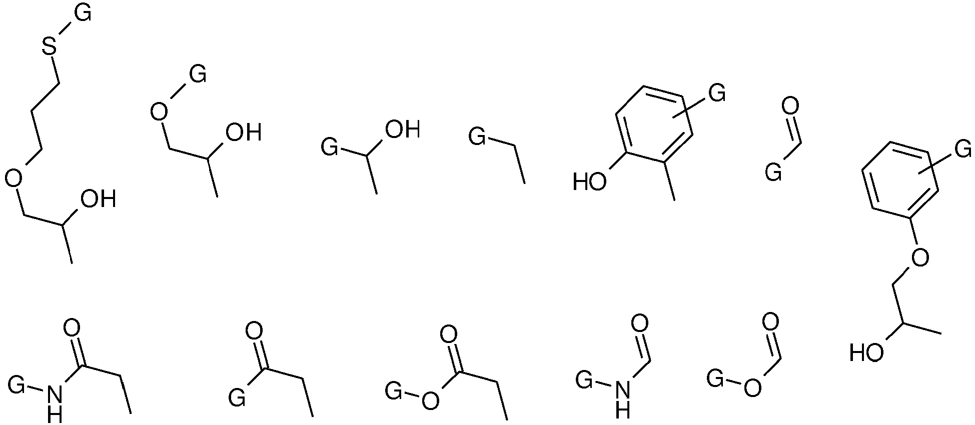

De préférence, le groupe L-G, est un groupe ayant l'une des formules suivantes :

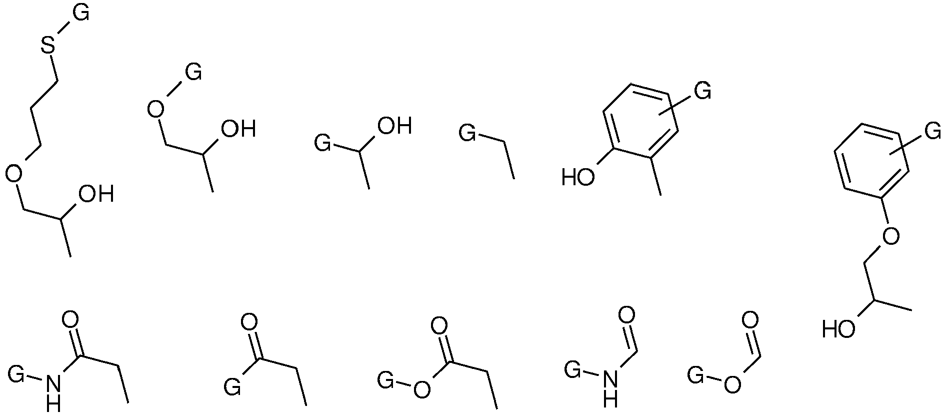

De préférence encore, le groupe L-G, est un groupe ayant l'une des formules suivantes :

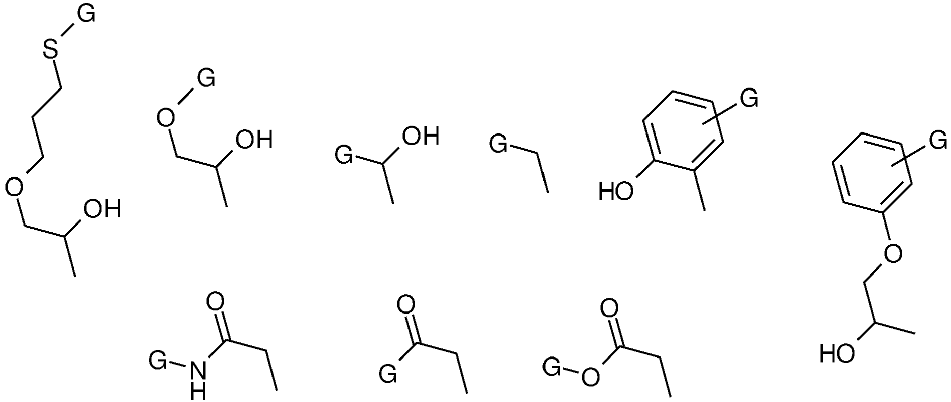

Les unités monomères de formule A préférées ou leurs sels sont des unités monomères de formules A1, A2 et/ou A3 ou leurs sels (de préférence A1 et/ou A2 ou leurs sels), où G a la signification indiquée précédemment :

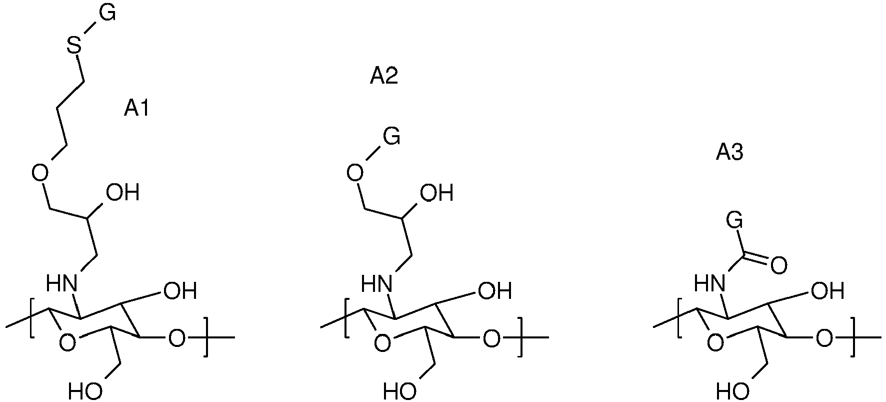

Les unités monomères de formules A, A1, A2 et A3 ou leurs sels peuvent être synthétisées par fonctionnalisation du chitosan en mettant en jeu des réactions chimiques bien connues de l'homme du métier. Les unités monomères A1 ou leurs sels peuvent par exemple être préparées par réaction du chitosan avec un époxyde approprié porteur d'une double liaison terminale (couplage époxy/amine), suivie d'une réaction bien connue de couplage thiol-ène avec un mercaptan approprié (méthode décrite dans la publication J. Polym. Sci., Part A: Polym. Chem. 2014, 52, 39-48 citée plus haut), alors que les unités monomères A2 et A3 ou leurs sels peuvent par exemple être préparées en une seule étape de réaction du chitosan avec un éther de glycidyle ou un chlorure d'acyle (voire un acide carboxylique) approprié.

Des unités monomères de formule A3bis peuvent être obtenues par réaction du chitosan avec un diacide carboxylique (ou un anhydride d'acide tel que l'anhydride succinique), puis fonctionnalisation de sa fonction carboxylique terminale avec alcool gras, où G a la signification indiquée précédemment, et L1 désigne un groupe alkyle, de préférence en C2-C16, mieux en C3-C8.

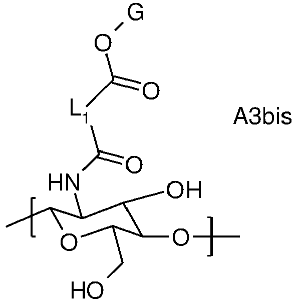

D'autres unités monomères de formule A utilisables (ou leurs sels) sont des unités monomères de formules A4, A5, A6 et/ou A8 ou leurs sels, où G a la signification indiquée précédemment :

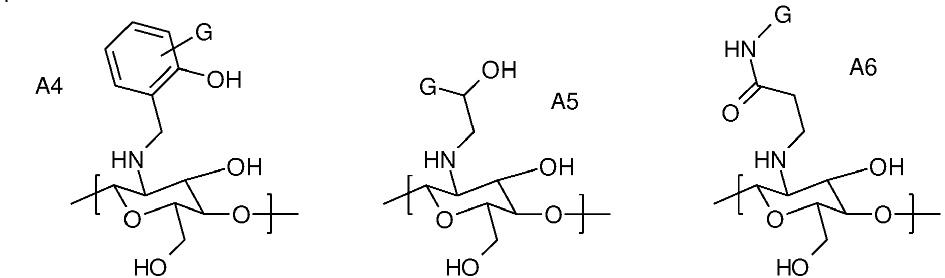

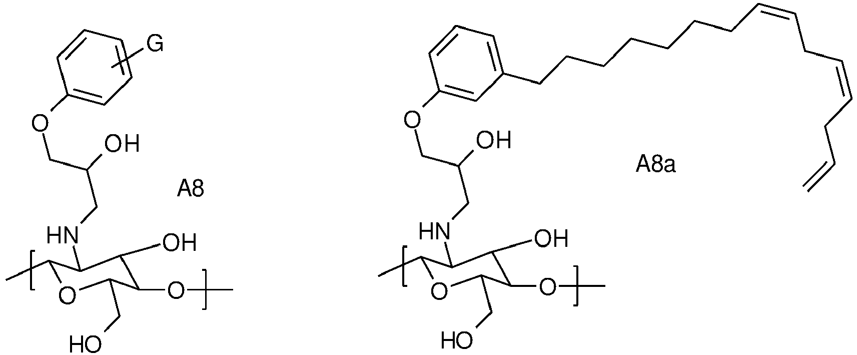

Les unités monomères A4 ou leurs sels peuvent être préparées par une réaction de couplage de type Mannich/Betti mettant en jeu le chitosan, le formaldéhyde et un phénol porteur d'une chaîne alkyle grasse G (lipide phénolique de type cardanol), située de préférence en position para par rapport au groupe méthylène-amino. Les unités monomères A5 et A8 ou leurs sels peuvent être préparées en une seule étape de réaction du chitosan avec un époxyde approprié, et les unités monomères A6 ou leurs sels peuvent être préparées en une seule étape d'addition de Michael du chitosan sur un acrylamide gras approprié.

Un exemple spécifique d'unité monomère A8 est l'unité monomère A8a, qui peut être obtenue par époxydation du chitosan avec le cardanol préalablement fonctionnalisé par le chlorure de glycidyle :

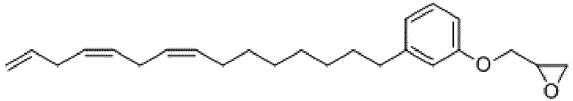

Dans le cas d'une amination réductrice du chitosan avec un aldéhyde gras, on obtient une unité monomère A de type A7 ou l'un de ses sels dans laquelle le groupe divalent L est le groupe méthylène.

Les réactions de fonctionnalisation des oligochitosans sont généralement réalisées dans des solvants polaires comme l'eau, éventuellement avec un tampon acétate, des alcools comme le méthanol, l'éthanol ou l'isopropanol, ou le DMSO. D'autres solvants comme le THF ou le toluène peuvent être utilisés. Les températures de réaction varient généralement de 25 à 100°C.

Les oligomères selon l'invention peuvent être utilisés en tant que tensioactifs cationiques ou non ioniques, selon la présence ou non de groupes amines protonés dans la chaîne (ce qui dépend du pH), pour la fabrication notamment d'émulsions bitumineuses ou non bitumineuses, d'huiles végétales ou pétrolières, pour l'abattement de poussières ou la régénération des structures routières, de peintures routières. Ils contribuent à la stabilité de l'émulsion et au réglage de la taille moyenne des gouttelettes et leur distribution étroite.

D'une façon générale, les unités monomères de formules A et/ou B peuvent se trouver, selon la valeur du pH, sous forme neutre ou sous forme de sel (c'est-à-dire une forme dans laquelle une ou plusieurs fonctions amines primaires ou secondaires sont protonées). Il est entendu que l'invention s'étend à toutes les formes acido-basiques de l'oligomère selon l'invention, non protoné, partiellement protoné ou complètement protoné.

En effet, dans ces composés, la chaîne dérivant de l'oligochitosan joue le rôle de partie hydrophile, alors que la ou les chaines grasses jouent le rôle de partie hydrophobe. Il présente l'avantage d'être préparé à partir d'une matière première d'origine naturelle (il est issu de déchets maritimes à plus de 95 %), non-toxique, biodégradable, peu couteuse, et disponible en grande quantité. En ce sens, le tensioactif de l'invention respecte généralement les principes de la chimie verte. Du fait de la possibilité d'accéder à des degrés de substitution des fonctions amine beaucoup plus élevés que dans le chitosan natif et compte tenu de son plus faible poids moléculaire et de son moindre encombrement stérique, il possède de bien meilleures propriétés d'émulsifiant, et n'est pas susceptible de provoquer une gélification du milieu.

Le tensioactif selon l'invention peut comprendre un mélange d'oligomères, différant notamment par la nature de leurs unités monomères de formule A ou leurs sels, par exemple lorsqu'il est obtenu par fonctionnalisation du chitosan par des réactifs issus de ressources renouvelables, comme les mélanges d'acides gras issus d'huiles de soja, colza, coco, coprah ou le tallol.

Les émulsions selon l'invention sont notamment utilisables dans l'industrie routière ou l'industrie du bâtiment, notamment la construction et l'entretien de chaussées ou en vue d'assurer l'étanchéité de fondations. Ainsi, une émulsion de liant selon l'invention peut être utilisée pour lier des granulats entre eux et éventuellement les coller sur le support sur lequel ils sont répandus ou faciliter leur adhérence.

Ainsi, l'invention concerne une émulsion aqueuse comprenant un liant bitumineux ou non bitumineux, qui peut être d'origine pétrolière ou issu de ressources renouvelables, et en tant qu'émulsifiant cationique ou non ionique au moins un oligomère selon l'invention. Une telle émulsion présente des propriétés de stabilité avantageuses, généralement supérieures à 5 jours, mieux 10 jours et encore mieux 15 jours (absence de rupture de l'émulsion).

Dans un mode de réalisation préféré, l'émulsion est une émulsion aqueuse de bitume pour la réalisation de couches et/ou de revêtements de construction routière et/ou de génie civil, de produits de marquage ou de produits d'étanchéité ou d'isolation (thermique ou phonique), comprenant un liant bitumineux et au moins un oligomère selon l'invention. Ce liant peut également être à base de latex acrylique ou vinylique.

Dans un autre mode de réalisation, l'émulsion est une émulsion aqueuse de liant synthétique, non bitumineux, généralement d'origine naturelle à base d'huile et/ou de graisse, en particulier une huile végétale, utilisable dans les mêmes applications que ci-dessus. Le risque d'épuisement des ressources pétrolières a en effet généré un besoin de développer de nouveaux liants non bitumineux à base de matières premières renouvelables susceptibles de se substituer dans diverses applications aux liants traditionnellement utilisés, qui sont composés d'éléments non renouvelables, tels que les liants bitumineux et les résines pétrochimiques. De tels liants sont notamment décrits dans les demandes WO 2011/092288, EP 0256467, FR 2853647, FR2995891, EP 3121213 ou EP 3262081.

Une émulsion est constituée d'une phase organique et d'une phase aqueuse, l'une desdites phases étant dispersée sous forme de gouttelettes discontinues dans une phase continue de l'autre. Les émulsions employées dans l'industrie routière sont généralement directes, c'est-à-dire que la phase dispersée à gouttelettes discontinues est constituée par la phase de liant bitumineux ou non bitumineux.

De façon classique, les émulsions de liant sont préparées par mélange dans un mélangeur approprié d'une phase organique et d'une phase aqueuse dispersante. Le diamètre médian des gouttelettes de liant constituant la phase dispersée varie généralement de 3 à 13 µm, avec un écart type allant de 0,2 à 0,8.

La phase huileuse (liant) dispersée peut être constituée soit de bitume pur, de liant synthétique pur, soit comprendre un mélange d'un liant avec divers additifs tels que des fluxants (fluidifiants) ou des polymères tels que des élastomères.

La phase aqueuse dispersante comprend notamment de l'eau et généralement un ou plusieurs agents émulsifiants, notamment des tensioactifs.

Une émulsion aqueuse fabriquée à partir des émulsifiants selon l'invention contient généralement 20 à 80 % en poids de phase organique (de préférence de 60 à 75 %) et 80 à 20 % en poids de phase aqueuse. La teneur en tensioactif selon l'invention varie de préférence de 0,05 à 5 % en masse, mieux de 0,1 à 2 % ou de 0,2 à 1 % en masse, par rapport à la masse totale de l'émulsion.

L'agent émulsifiant peut être ajouté à la phase aqueuse dispersante, à la phase organique ou en partie à chacune de ces deux phases. Il est généralement contenu, de préférence en totalité, dans la phase aqueuse dispersante mélangée avec le liant. En variante, il est également possible d'ajouter le tensioactif selon l'invention ou un tensioactif additionnel à la phase dispersée.

Pour composer une émulsion cationique, le pH de la phase aqueuse est généralement ajusté à 2-3 par addition d'un acide tel que l'acide chlorhydrique, l'acide acétique ou l'acide phosphorique, de préférence à hauteur de 0,1 à 5 % en masse, par rapport à la masse totale de l'émulsion. La concentration saline en composés NaCI et/ou CaCl₂ varie de préférence de 0,05 à 1 % en masse.

L'émulsion peut en outre contenir de 0,01 à 5 % en masse de chitosan (c'est-à-dire sous forme de polymère), mieux de 0,05 % à 1 % en masse, ayant de préférence une masse molaire allant de 100.000 g/mol à 1.000.000 g/mol, de préférence de 150.000 g/mol à 500.000 g/mol, typiquement de l'ordre de 250 000 g/mol. Les inventeurs ont en effet constaté que la présence de cet additif conférait à l'émulsion une meilleure stabilité et permettait de maîtriser la viscosité de l'émulsion par épaississement de la phase aqueuse.

L'émulsion selon l'invention peut contenir les additifs usuels utilisés dans la technique et notamment des stabilisants, agents antigel, agents épaississants, agents colorants tels que des pigments minéraux et des colorants organiques, agents de durcissement, latex naturels ou synthétiques (par exemple un latex de styrène-butadiène-styrène SBS, polychloroprène ou caoutchouc-butadiène-styrène SBR), lesquels sont préférablement ajoutés à la phase aqueuse dispersante.

Le liant bitumineux peut comprendre tout bitume, en particulier tout bitume classiquement utilisé dans les applications routières et industrielles, tels que les bitumes de distillation directe, quel que soit leur grade de pénétrabilité, les bitumes de synthèse, en particulier colorables, de désasphaltage ou oxydés. Le bitume employé peut éventuellement être modifié par adjonction d'additifs. En particulier, le liant bitumineux peut comprendre un ou plusieurs polymères ou copolymères, tels que les polyoléfines ou les polymères et copolymères élastomères comme les polymères et copolymères de styrène et de butadiène.

Le liant peut éventuellement être fluxé (fluidifié), c'est-à-dire comprendre au moins un fluxant (fluidifiant), tel qu'un solvant d'origine pétrolière, pétrochimique ou carbochimique, ou de préférence un fluxant d'origine naturelle à base de matières grasses animales et/ou végétales, renouvelables et non toxiques. Ces fluxants d'origine naturelle peuvent avantageusement être modifiés par oxydation afin d'augmenter leur siccativité, tel qu'exposé dans la demande FR 2876382, au nom du déposant.

La teneur en liant varie généralement de 25 à 100 %, de préférence de 50 à 100 %, mieux de 65 à 90 % en poids par rapport au poids total de phase organique.

La teneur en fluxant varie généralement de 0 à 75 %, de préférence de 0 à 50 %, mieux de 10 à 35 % en poids par rapport au poids total du liant bitumineux.

Le liant peut être mis en émulsion à l'aide des moyens classiques utilisés pour l'émulsification des bitumes et liant non bitumineux, par exemple le moulin colloïdal, le mélangeur statique ou les procédés par inversion de phase en régime laminaire. La formule de l'émulsion de liant selon l'invention est choisie en fonction de l'application visée.

Le liant est mis en émulsion afin d'en faciliter l'usage dans des procédés ou applications aussi divers(es) que l'enrobage ou l'enduisage (notamment enduits superficiels, à l'émulsion ou aux liants anhydres - technique consistant à répandre sur la chaussée à revêtir un lit de granulat calibré, puis un film d'émulsion), les couches d'accrochage, les enrobés, les enrobés coulés à froid (enrobés à froid à l'émulsion), les couches de cure, l'imprégnation, le traitement des sols et des graves, les graves d'émulsion, les enrobés à l'émulsion, les coulis bitumineux, d'une manière générale les procédés tels que décrits dans l'ouvrage « Les émulsions de bitume » édité en 1988 par la section des fabricants d'émulsions routières de bitume (SFERB), les couches de protection de pipe-lines, d'ouvrage métalliques, d'ouvrage en béton, la fabrication de panneaux d'isolation thermiques et phoniques à base de particules de bois ou de matériaux polymères, et d'une manière générale les usages décrits dans "The Shell Bitumen Industrial Handbook" publié par Shell Bitumen en 1995, ISBN 0-9516625-1-1.

Les produits préparés à partir de l'émulsion de liant selon l'invention peuvent être utilisés pour la réalisation de matériaux pour le bâtiment et les travaux publics, et en particulier pour la construction et la réparation de routes, autoroutes, pistes d'aérodrome, sols industriels, sportifs ou piétonniers, les aménagements de voirie et réseaux divers, les réseaux de voie ferrée ; des matériaux pour la mise en place des équipements de la route tels que la signalisation (produits de marquage) ; des matériaux pour la construction de bâtiments industriels, la protection et le bardage des ouvrages de génie civil et des bâtiments industriels, les murs antibruit et les aménagements de sécurité ainsi que la production de tous matériaux en relation avec ces domaines.

Le liant peut aussi être utilisé pour la fabrication de produits d'étanchéité ou d'isolation, notamment des membranes, géomembranes et feuilles d'étanchéité, ou pour la fabrication de produits de marquage.

La fabrication des émulsions de liant est décrite plus en détail dans les demandes WO 2008/009694 et EP 2692800. Les applications possibles des émulsions de liants selon l'invention sont quant à elles décrites plus en détail dans la demande FR 2995891.

Le procédé de préparation de l'oligomère biosourcé défini ci-dessus, comprend une étape de dépolymérisation du chitosan, de façon à obtenir un oligomère de chitosan, suivie d'une étape de fonctionnalisation de l'oligomère de chitosan, par greffage d'au moins une chaîne alkyle grasse G, de façon à ce qu'il comprenne des unités monomères de formule A ou l'un de leurs sels. La fonctionnalisation porte sur une fonction amine libre du chitosan et connecte la chaîne alkyle grasse G par l'intermédiaire d'un groupe divalent L.

L'invention concerne également l'utilisation d'un oligomère selon l'invention comme émulsifiant cationique ou non ionique dans une émulsion aqueuse comprenant un liant bitumineux ou non bitumineux, en vue notamment de la stabiliser.

Les exemples qui suivent illustrent l'invention sans la limiter. Sauf indication contraire, les parties et pourcentages sont exprimés en poids.

### Exemples

### I. Matériaux utilisés

Le chitosan utilisé est le chitosan 652, issu de carapaces de crevettes, fourni par la société France Chitine (Marseille, France), ayant un degré d'acétylation (DA) de l'ordre de 16 %, une masse moléculaire d'environ 250.000 g/mol et un taux d'hydratation de 10 % en masse (déterminé par analyse thermogravimétrique). Il est soluble dans les solutions aqueuses de pH < 6.

L'allyl glycidyl éther (97%, Alfa Aesar), l'acide 3-mercaptopropionique (> 99%, Aldrich), l'huile Carter EP 220 (Total) l'hexadécylglycidyl éther (Aldrich, grade technique), l'acétone (Aldrich), l'octanethiol (>98% Aldrich), l'acide acétique (>99%, Aldrich), le peroxyde d'hydrogène (Aldrich, 35 % en masse dans H₂O), l'AIBN (98%, Aldrich), le DMSO (> 97%, VWR) ont été utilisés tels que reçus.

Le chlorure d'acyle de tallol a été synthétisé à partir de tallol et de SOCl₂ (>99% Aldrich).

### II. Préparation de tensioactifs selon l'invention à base de chitosan fonctionnalisé

### a) Dépolymérisation du chitosan

Dans un ballon tricol de 500 mL, 5 g de chitosan sont solubilisés dans 150 mL d'eau. Après solubilisation complète, le ballon est placé au four micro-ondes (réacteur Mars™ 6 Synthesis de la société CEM Corporation) et équipé d'un réfrigérant. Le mélange réactionnel est irradié à 1300 W jusqu'à ce que la température atteigne 100°C. Le ballon est refroidi jusqu'à 30°C et l'opération répétée encore 2 fois. A la fin du processus de dépolymérisation, le ballon est refroidi et le pH de la solution ramené à 9 par ajout d'une solution de soude. Une fois la solution filtrée, le filtrat concentré est précipité dans 200 mL d'un mélange isopropanol/acétone (70/30). Le résidu obtenu est séché à l'étuve sous vide à 60°C pendant une nuit. Des oligomères de chitosan d'environ 700 g/mol sont obtenus.

Le chitosan peut également être dépolymérisé par désamination nitreuse (NaNO₂, HCl ou acide acétique, 24h à température ambiante ou 3h à 50°C, puis lyophilisation du produit obtenu). Plus la quantité de NaNO₂ employée est importante, plus les masses molaires obtenues sont faibles. Les oligomères de chitosan peuvent également être précipités en milieu basique lorsque l'on désire des tailles supérieures à 20 unités monomères.

### b) Préparation d'un tensioactif par fonctionnalisation d'un oliaomère de chitosan avec l'hexadécylglycidyl éther

1 g d'oligomère de chitosan (1 eq NH₂, environ 5 unités monomères) est solubilisé dans 15 mL de DMSO à 80°C. Après solubilisation complète, le ballon est ramené à température ambiante et l'hexadécylglycidyl éther (1 eq / NH₂) est ajouté à la solution d'oligochitosan. La réaction est menée à 80°C pendant 72h. A la fin de ce temps, le mélange est précipité dans 200 mL d'acétone et filtré. Le résidu est lavé plusieurs fois avec de l'acétone puis séché sous vide à 60°C pendant une nuit. Les taux de fonctionnalisation des groupements amine primaire du chitosan ont été déterminés par RMN ¹H.

Le tensioactif obtenu comprend des unités monomères de formule A2b. La RMN ¹H permet également de déterminer que le composé comprend en moyenne 3 unités monomères glucosamine de formule B, 1 unité monomère N-acétylglucosamine de formule C, et 1 unité monomère de formule A2b.

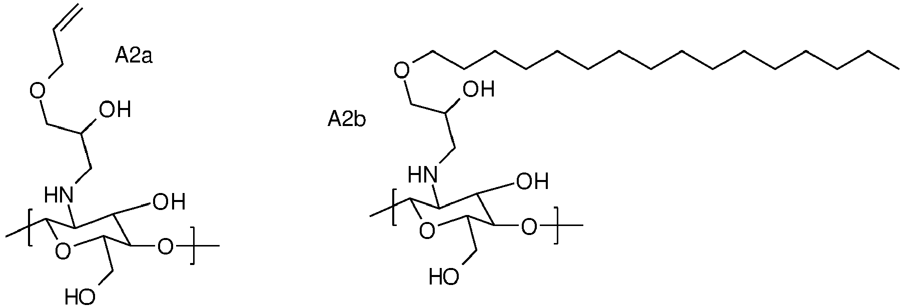

### c) Préparation d'un tensioactif par fonctionnalisation d'un oliaomère de chitosan avec l'allyl glycidyl éther suivie d'un couplage thiol-ène

Dans une première étape, l'oligomère de chitosan a été fonctionnalisé par l'allyl glycidyl éther pour obtenir un composé comprenant des unités monomères de formule A2a, de la même manière que dans le paragraphe a).

Dans une seconde étape, 0.5 g d'oligochitosan modifié par allyl glycidyl éther (1 eq. de fonctions allyle) et de l'octanethiol (3 à 10 eq/allyl) sont solubilisés dans 10 mL de DMSO à 80°C. Le milieu est purgé avec de l'argon pendant 10 minutes, puis de l'AIBN (0.1 eq / allyl) est ajouté dans le ballon et la purge est maintenue 10 minutes de plus. La réaction est par la suite menée à 80°C pendant 48h. La RMN ¹H montre que la réaction a été quasi quantitative (99 % de conversion des fonctions allyle lorsque 10 eq. de thiol sont utilisés). Le tensioactif obtenu comprend des unités monomères de formule A1a.

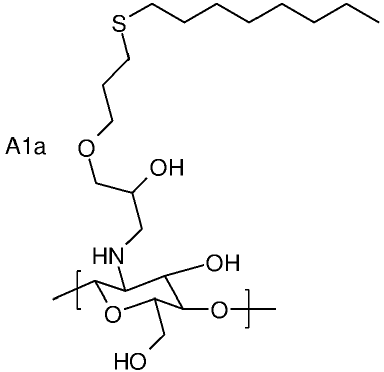

### d) Préparation d'un tensioactif par fonctionnalisation d'un oligomère de chitosan avec un chlorure d'acides gras de tallol

1 g d'oligomère (1 eq NH₂) est solubilisé dans 15 mL de DMSO à 80°C. Après solubilisation complète, le ballon est ramené à température ambiante et le chlorure d'acyle (chlorure d'acides gras de tallol, entre 0.5 et 1 eq / NH₂) est ajouté à la solution. La réaction est menée à 80°C pendant 72h. A la fin de ce temps, le mélange est précipité dans 250 mL d'acétone et filtré. Le résidu est lavé plusieurs fois avec de l'acétone puis séché sous vide à 60°C pendant une nuit. Des degrés de substitution de 10 à 40 % sont obtenus en fonction du nombre d'équivalents de chlorure d'acyle utilisés. Le tensioactif obtenu comprend des unités monomères de formule A3a (avec des chaînes issues principalement des acides gras suivants : acide linoléique, acides oléiques et α-linoléique et acide palmitique).

### e) Mise en émulsion d'une huile modèle

L'huile CARTER EP 220 fournie par la société Total possède des caractéristiques similaires au bitume (viscosité à 40°C de 220 Pa/s selon la norme ISO 3104). Elle a été utilisée pour tester le caractère émulsifiant des tensioactifs synthétisés.

L'émulsifiant utilisé est synthétisé selon la réaction d'amidation présentée ci-dessus dans le paragraphe c) avec un degré de substitution de 40%. L'émulsion est composée de 62% d'huile et 38% de phase aqueuse en poids. La phase aqueuse est elle-même composée d'eau, du tensioactif comprenant des unités monomères de formule A3a (0.4 % en poids de l'émulsion) et d'acide chlorhydrique (pH 2). L'huile et la phase aqueuse sont chauffées à 40°C puis mélangée à l'aide d'un disperseur Ultra-Turrax® T18 Digital de IKA pendant 5 minutes à 21.000 tr/min.

L'émulsion obtenue est une émulsion huile dans eau relativement stable pendant 24h. Elle conserve une bonne stabilité pendant 5 jours (pas de rupture définitive). L'ajout à la phase aqueuse de cette émulsion de 0.08 % en poids de chitosan à 250 000 g/mol par rapport au poids de l'émulsion permet d'améliorer sa stabilité à 5 jours.

Des analyses de microscopie en épifluorescence ont été réalisées sur l'émulsion et ont permis de constater que les gouttelettes de l'émulsion d'huile sont sphériques. Une analyse granulométrique réalisée avec le granulomètre laser MALVERN Mastersizer 2000 indique que le diamètre médian des gouttelettes est de 10,2 µm (± 0,21 µm).

### f) Mise en émulsion d'un bitume

Une émulsion bitumineuse a été préparée d'une façon similaire au paragraphe précédent en utilisant par un bitume de grade 160/220 de la raffinerie Total Gonfreville dans un moulin colloïdal de type Emulbitume®.

L'émulsion a été formulée avec 69 % de phase bitumineuse (690 kg/t) et 31 % de phase aqueuse (310 kg/t dont 3 kg/t de tensioactif et 0,1 kg/t d'acide chlorhydrique pour ajuster le pH à 2).

L'émulsion obtenue est une émulsion directe (bitume dans eau) stable pendant au moins 15 jours (pas de rupture définitive).

Des analyses de microscopie en épifluorescence ont été réalisées sur l'émulsion et ont permis de constater que les gouttelettes de l'émulsion bitumineuse sont non sphériques, ce qui témoigne d'une réelle structuration de l'interface par le tensioactif. Une analyse granulométrique réalisée avec le granulomètre laser MALVERN Mastersizer 2000 indique que le diamètre médian des gouttelettes est de 20 µm (± 0,27 µm). Le fait que le diamètre médian soit plus élevé que celui de l'émulsion d'huile du paragraphe précédent s'explique par une concentration plus faible en tensioactif l'émulsion (0,3 % au lieu de 0,4 % en poids).

### g) Test d'écotoxicité

L'écotoxicité du tensioactif comprenant des unités monomères de formule A3a (avec un degré de substitution de 40 %) a été évaluée en déterminant la concentration efficace médiane (EC 50) qui, en 24 heures et/ou 48 heures, immobilise 50 % d'une population de daphnies (microcrustacés). Aucun comportement ou signe anormal des daphnies n'a été observé en présence d'une concentration de 100 mg/mL de tensioactif, indiquant que la concentration efficace médiane est supérieure à 100 mg/mL.

## Revendications

1. Oligomère biosourcé obtenu par fonctionnalisation d'un oligomère de chitosan de façon à ce qu'il comprenne des unités monomères de formule A ou l'un de leurs sels : 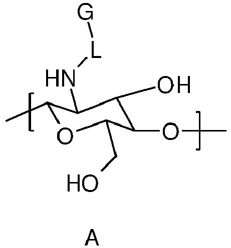 où L désigne un groupe divalent et G désigne une chaîne alkyle grasse comprenant de 5 à 30 atomes de carbone, de préférence de 10 à 18 atomes de carbone, éventuellement substituée, saturée ou insaturée, le groupe L-G, étant un groupe ayant l'une des formules suivantes :

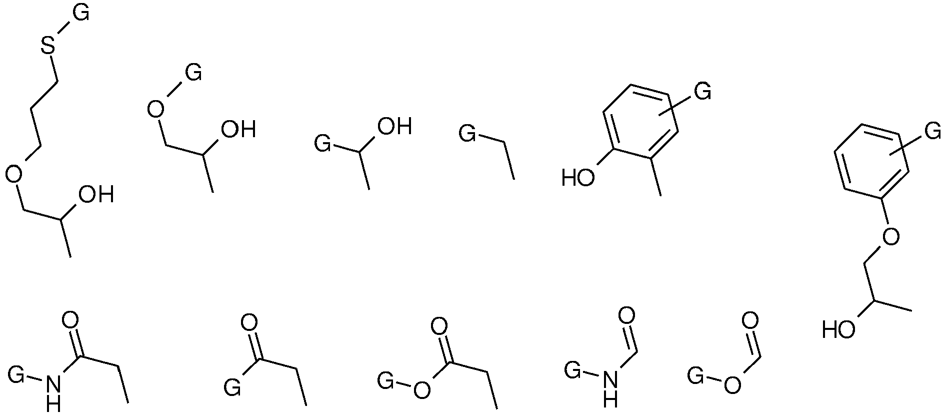

2. Oligomère selon l'une quelconque des revendications précédentes, **caractérisé en ce qu'**il est obtenu par fonctionnalisation d'un oligomère de chitosan de façon à ce qu'il comprenne des unités monomères de formules A1 et/ou A2 ou l'un de leurs sels, où G a la signification indiquée dans la revendication 1 :

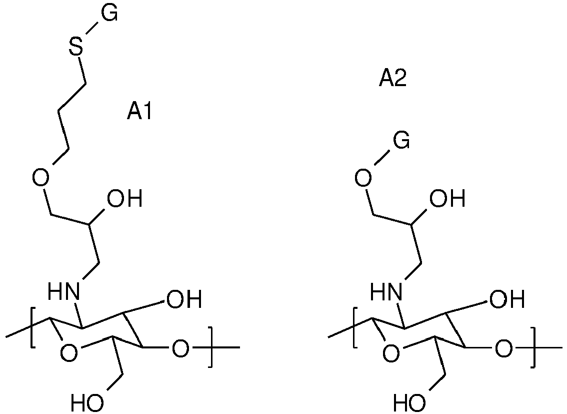

3. Oligomère selon l'une quelconque des revendications précédentes, **caractérisé en ce qu'**il comprend en outre des unités monomères de formule B ou l'un de leurs sels :

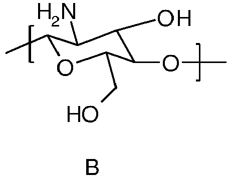

4. Oligomère selon la revendication 3, **caractérisé en ce que** le ratio nombre d'unités monomères de formule A ou leurs sels / nombre d'unités monomères de formule B ou leurs sels présentes dans sa structure varie de 20/80 à 60/40, de préférence de 25/75 à 50/50.

5. Oligomère selon l'une quelconque des revendications précédentes, **caractérisé en ce qu'**il comprend en outre des unités monomères de formule C :

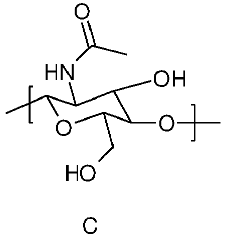

6. Oligomère selon l'une quelconque des revendications précédentes, **caractérisé en ce que** les unités monomères A ou leurs sels sont présentes dans sa structure dans des proportions variant de 10 à 70 %, par rapport au nombre total d'unités monomères, mieux de 12 à 50 %.

7. Oligomère selon l'une quelconque des revendications précédentes, **caractérisé en ce qu'**il comprend de 2 à 50 unités monomères, de préférence de 5 à 20 unités monomères.

8. Oligomère selon l'une quelconque des revendications précédentes, **caractérisé en ce qu'**il possède une masse molaire variant de 500 à 35.000 g/mol, de préférence de 600 à 10.000 g/mol.

9. Oligomère selon l'une quelconque des revendications précédentes, **caractérisé en ce que** le groupe L-G, dans le quel G a la signification indiquée dans la revendication 1, est un groupe ayant l'une des formules suivantes :

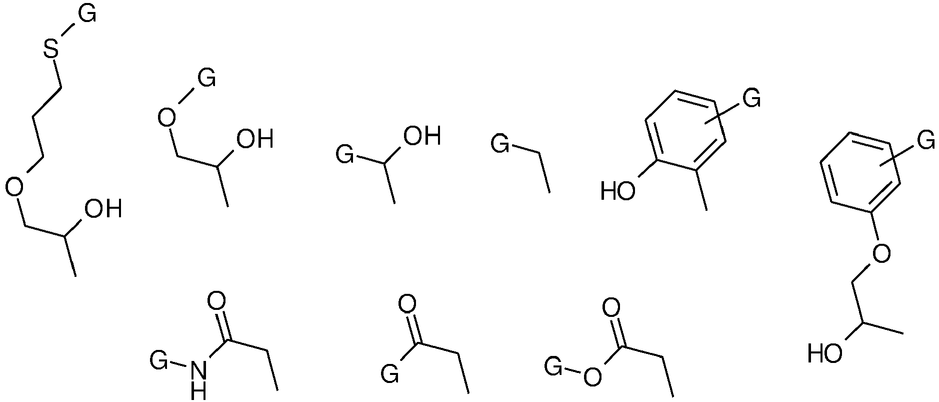

10. Émulsion aqueuse comprenant un liant bitumineux ou non bitumineux, et en tant qu'émulsifiant cationique ou non ionique au moins un oligomère biosourcé obtenu par fonctionnalisation d'un oligomère de chitosan de façon à ce qu'il comprenne des unités monomères de formule A ou l'un de leurs sels : 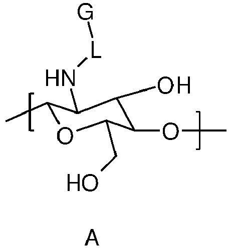 où L désigne un groupe divalent et G désigne une chaîne alkyle grasse comprenant de 5 à 30 atomes de carbone, éventuellement substituée, saturée ou insaturée.

11. Émulsion selon la revendication 10, **caractérisée en ce que** ledit émulsifiant représente de 0,05 à 5 % en masse par rapport à la masse totale de l'émulsion.

12. Émulsion selon la revendication 10 ou 11, **caractérisée en ce que** sa phase aqueuse représente de 20 à 80 % en masse de la masse totale de l'émulsion, de préférence de 25 à 40 % en masse.

13. Émulsion selon l'une quelconque des revendications 10 à 12, **caractérisée en ce que** l'oligomère est obtenu par fonctionnalisation d'un oligomère de chitosan de façon à ce qu'il comprenne des unités monomères de formules A1, A2 et/ou A3 ou l'un de leurs sels, où G a la signification indiquée dans la revendication 1 :

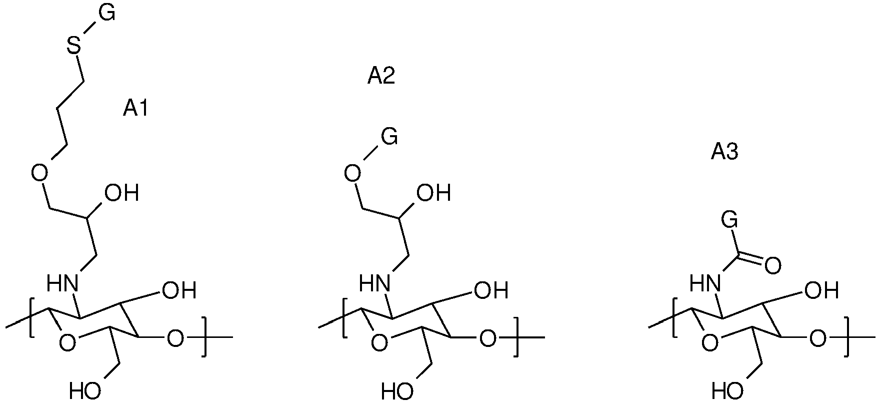

14. Émulsion selon l'une quelconque des revendications 10 à 13, **caractérisée en ce que** le groupe L-G, dans le quel G a la signification indiquée dans la revendication 1, est un groupe ayant l'une des formules suivantes :

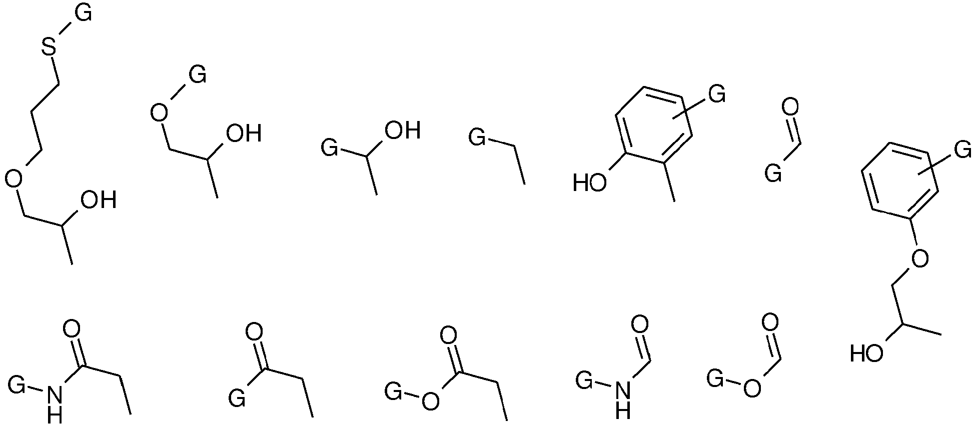

15. Utilisation comme émulsifiant cationique ou non ionique, dans une émulsion aqueuse comprenant un liant bitumineux ou non bitumineux, d'un oligomère biosourcé obtenu par fonctionnalisation d'un oligomère de chitosan de façon à ce qu'il comprenne des unités monomères de formule A ou l'un de leurs sels : 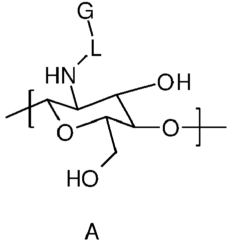 où L désigne un groupe divalent et G désigne une chaîne alkyle grasse comprenant de 5 à 30 atomes de carbone, éventuellement substituée, saturée ou insaturée.

## Patentansprüche

1. Oligomer biologischer Herkunft, das erhalten wurde, indem ein Chitosanoligomer derart funktionalisiert wurde, dass es Monomereinheiten der Formel A oder eines von deren Salzen umfasst: 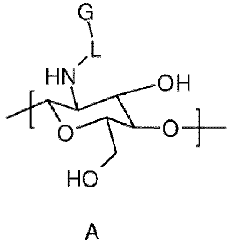 wobei L eine zweibindige Gruppe bezeichnet und G eine Fettalkylkette bezeichnet, die 5 bis 30 Kohlenstoffatome, vorzugsweise 10 bis 18 Kohlenstoffatome umfasst, wobei sie möglicherweise substituiert sowie gesättigt oder ungesättigt ist, wobei es sich bei der Gruppe L-G um eine Gruppe handelt, die eine der folgenden Formeln hat:

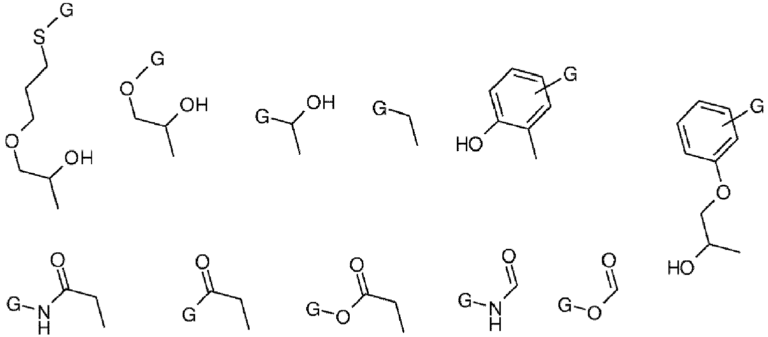

2. Oligomer nach einem beliebigen der vorhergehenden Ansprüche, **dadurch gekennzeichnet, dass** es erhalten wurde, indem ein Chitosanoligomer derart funktionalisiert wurde, dass es Monomereinheiten der Formeln A1 und/oder A2 oder eines von deren Salzen umfasst, wobei G die Bedeutung gemäß den Angaben in Anspruch 1 hat:

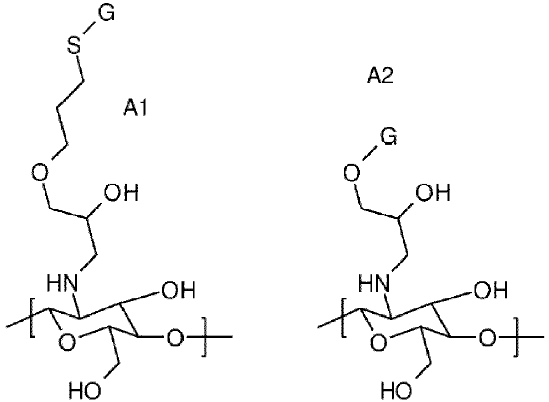

3. Oligomer nach einem beliebigen der vorhergehenden Ansprüche, **dadurch gekennzeichnet, dass** es darüber hinaus Monomereinheiten der Formel B oder eines von deren Salzen umfasst :

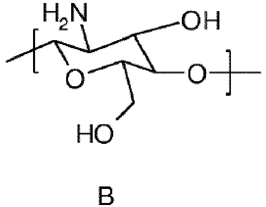

4. Oligomer nach Anspruch 3, **dadurch gekennzeichnet, dass** das zahlenmäßige Verhältnis von Monomereinheiten der Formel A oder deren Salzen / Monomereinheiten der Formel B oder deren Salzen, wie sie in dessen Struktur vorliegen, innerhalb einer Schwankungsbreite von 20/80 bis 60/40, vorzugsweise von 25/75 bis 50/50 liegt.

5. Oligomer nach einem beliebigen der vorhergehenden Ansprüche, **dadurch gekennzeichnet, dass** es darüber hinaus Monomereinheiten der Formel C umfasst :

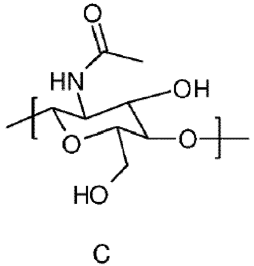

6. Oligomer nach einem beliebigen der vorhergehenden Ansprüche, **dadurch gekennzeichnet, dass** die Monomereinheiten A oder deren Salze in dessen Struktur in Anteilen vorliegen, welche innerhalb einer Schwankungsbreite von 10 bis 70 %, bezogen auf die Gesamtzahl an Monomereinheiten, besser von 12 bis 50 % liegen.

7. Oligomer nach einem beliebigen der vorhergehenden Ansprüche, **dadurch gekennzeichnet, dass** es 2 bis 50 Monomereinheiten, vorzugsweise 5 bis 20 Monomereinheiten umfasst.

8. Oligomer nach einem beliebigen der vorhergehenden Ansprüche, **dadurch gekennzeichnet, dass** es eine Molmasse innerhalb einer Schwankungsbreite von 500 bis 35.000 g/mol, vorzugweise von 600 bis 10.000 g/mol besitzt.

9. Oligomer nach einem beliebigen der vorhergehenden Ansprüche, **dadurch gekennzeichnet, dass** es sich bei der Gruppe L-G, in welcher G die Bedeutung gemäß den Angaben im Anspruch 1 hat, um eine Gruppe handelt, welche eine der folgenden Formeln hat:

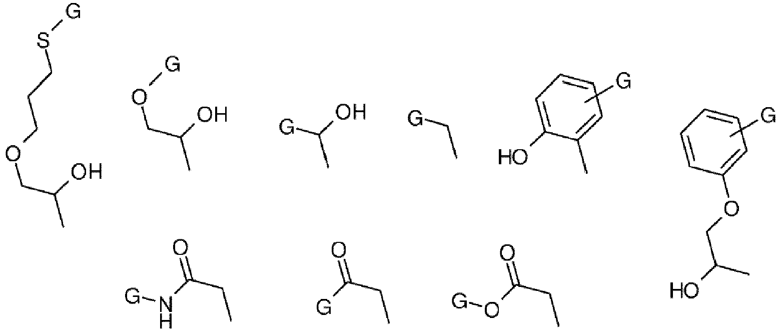

10. Wässrige Emulsion, die ein bituminöses oder nichtbituminöses Bindemittel, sowie als kationischen oder nichtionischen Emulgator mindestens ein Oligomer biologischer Herkunft umfasst, welches erhalten wurde, indem ein Chitosanoligomer derart funktionalisiert wurde, dass es Monomereinheiten der Formel A oder eines von deren Salzen umfasst: 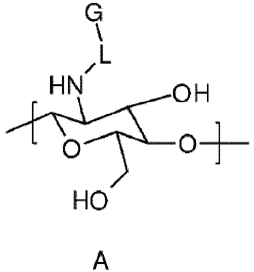 wobei L eine zweibindige Gruppe bezeichnet und G eine Fettalkylkette bezeichnet, die 5 bis 30 Kohlenstoffatome umfasst, wobei sie möglicherweise substituiert sowie gesättigt oder ungesättigt ist.

11. Emulsion nach Anspruch 10, **dadurch gekennzeichnet, dass** der Emulgator 0,05 bis 5 Massen-% ausmacht, bezogen auf die Gesamtmasse der Emulsion.

12. Emulsion nach Anspruch 10 oder 11, **dadurch gekennzeichnet, dass** ihre wässrige Phase 20 bis 80 Massen-%, der Gesamtmasse der Emulsion ausmacht, vorzugsweise 25 bis 40 Massen-% .

13. Emulsion nach einem beliebigen der Ansprüche 10 bis 12, **dadurch gekennzeichnet, dass** das Oligomer erhalten wurde, indem ein Chitosanoligomer derart funktionalisiert wurde, dass es Monomereinheiten der Formeln A1, A2 und/oder A3 oder eines von deren Salzen umfasst, wobei G die Bedeutung gemäß den Angaben in Anspruch 1 hat:

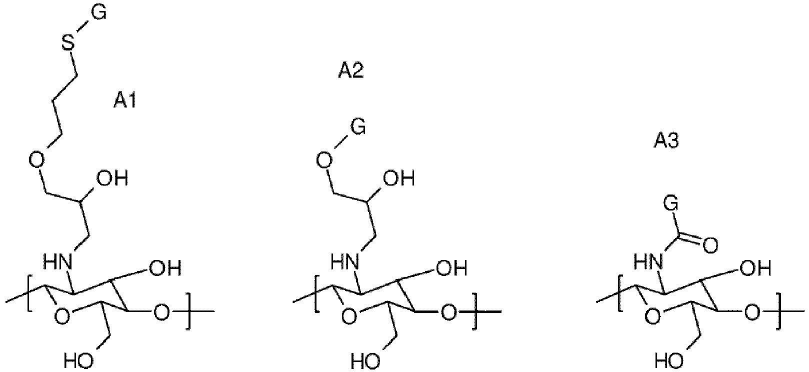

14. Emulsion nach einem beliebigen der Ansprüche 10 bis 13, **dadurch gekennzeichnet, dass** es sich bei der Gruppe L-G, in welcher G die Bedeutung gemäß den Angaben im Anspruch 1 hat, um eine Gruppe handelt, welche eine der folgenden Formeln hat:

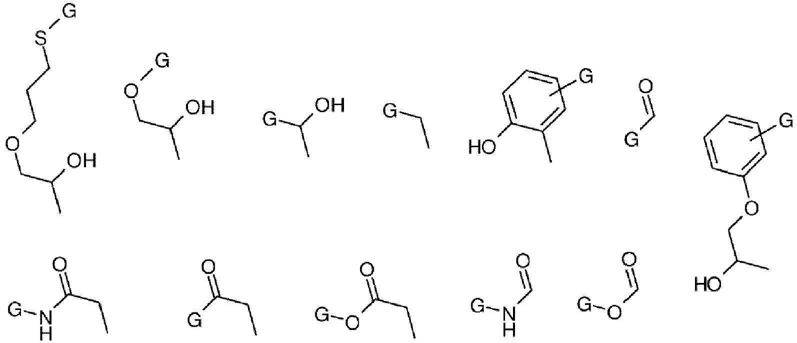

15. Verwendung eines Oligomers biologischer Herkunft, welches erhalten wurde, indem ein Chitosanoligomer derart funktionalisiert wurde, dass es Monomereinheiten der Formel A oder eines von deren Salzen umfasst, als kationischer oder nichtionischer Emulgator in einer wässrigen Emulsion, die ein bituminöses oder nichtbituminöses Bindemittel umfasst: 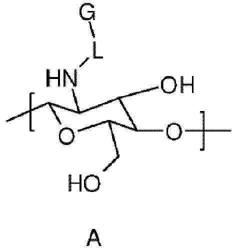 wobei L eine zweibindige Gruppe bezeichnet und G eine Fettalkylkette bezeichnet, die 5 bis 30 Kohlenstoffatome umfasst, wobei sie möglicherweise substituiert sowie gesättigt oder ungesättigt ist.

## Claims

1. A bio-sourced oligomer obtained by functionalisation of a chitosan oligomer so that it comprises monomer units of formula A or one of the salts thereof: 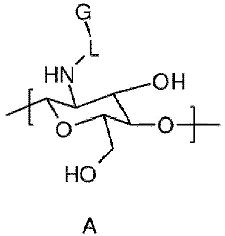 wherein L designates a divalent group and G designates a fatty alkyl chain comprising 5 to 30 carbon atoms, preferably 10 to 18 carbon atoms, optionally substituted, saturated or unsaturated, the L-G group being a group having one of the following formulae:

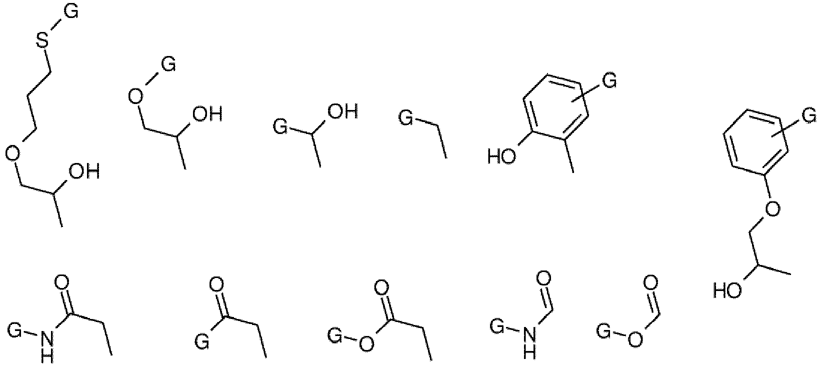

2. The oligomer according to any of the preceding claims, **characterised in that** it is obtained by functionalisation of a chitosan oligomer so that it comprises monomer units of formulae A1 and/or A2 or one of the salts thereof, where G has the meaning given in claim 1:

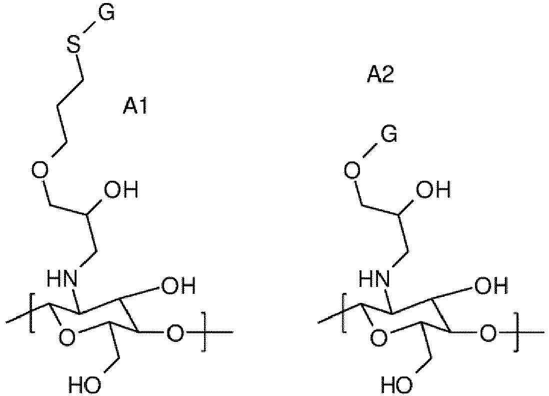

3. The oligomer according to any of the preceding claims, **characterised in that** it further comprises monomer units of formula B or one of the salts thereof:

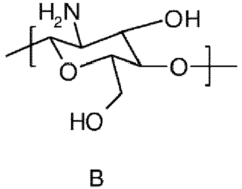

4. The oligomer of claim 3, **characterised in that** the ratio of the number of monomer units of formula A or the salts thereof / number of monomer units of formula B or the salts thereof which are present in its structure ranges from 20/80 to 60/40, preferably from 25/75 to 50/50.

5. The oligomer according to any of the preceding claims, **characterised in that** it further comprises monomer units of formula C:

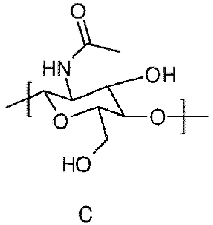

6. The oligomer according to any of the preceding claims, **characterised in that** the monomer units A or the salts thereof are present in its structure in proportions ranging from 10 to 70%, relative to the total number of monomer units, better still from 12 to 50%.

7. The oligomer according to any of the preceding claims, **characterised in that** it comprises from 2 to 50 monomer units, preferably from 5 to 20 monomer units.

8. The oligomer according to any of the preceding claims, **characterised in that** it has a molar mass ranging from 500 to 35,000 g/mol, preferably from 600 to 10,000 g/ mol.

9. The oligomer according to any of the preceding claims, **characterised in that** the L-G group, in which G has the meaning indicated in claim 1, is a group having one of the following formulae:

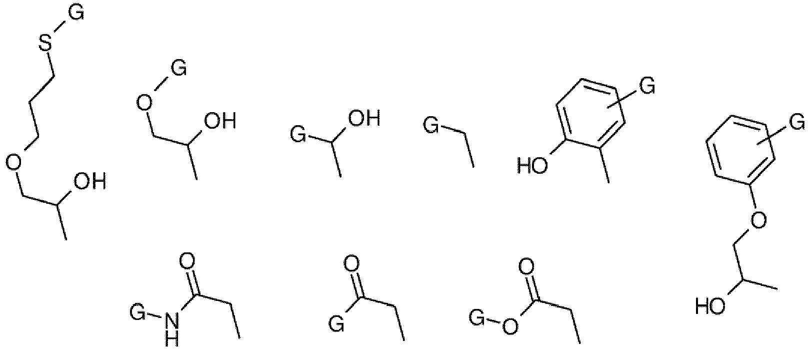

10. An aqueous emulsion comprising a bituminous or non-bituminous binder and, as cationic or nonionic emulsifier, at least one bio-sourced oligomer obtained by functionalisation of a chitosan oligomer so that it comprises monomer units of formula A or one of the salts thereof: 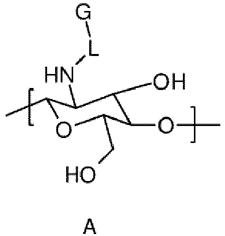 wherein L designates a divalent group and G designates a fatty alkyl chain comprising 5 to 30 carbon atoms, optionally substituted, saturated or unsaturated.

11. The emulsion of claim 10, **characterised in that** said emulsifier represents from 0.05 to 5% by mass relative to the total mass of the emulsion.

12. The emulsion of claim 10 or 11, **characterised in that** its aqueous phase represents from 20 to 80% by mass of the total mass of the emulsion, preferably from 25 to 40 % by mass.

13. The emulsion according to any of claims 10 to 12, **characterised in that** the oligomer is obtained by functionalising a chitosan oligomer so that it comprises monomer units of formulae A1, A2 and/or A3 or one of the salts thereof, where G has the meaning indicated in claim 1:

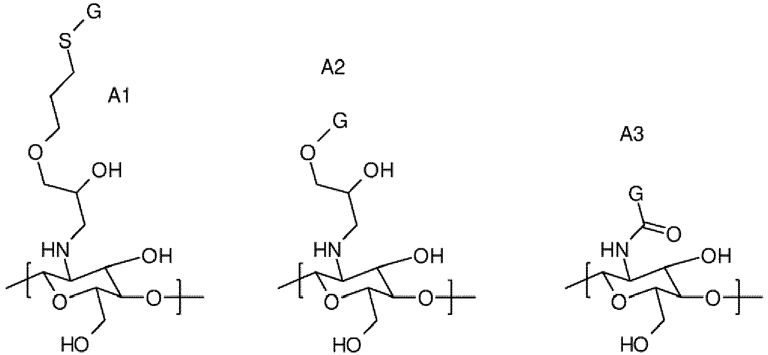

14. The emulsion according to any of claims 10 to 13, **characterised in that** the L-G group, in which G has the meaning indicated in claim 1, is a group having one of the following formulae:

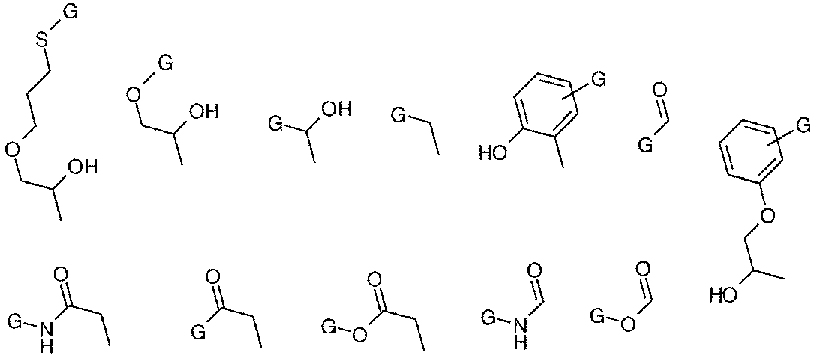

15. A use as cationic or nonionic emulsifier, in an aqueous emulsion comprising a bituminous or non-bituminous binder, of a bio-sourced oligomer obtained by functionalisation of a chitosan oligomer so that it comprises monomer units of formula A or one of the salts thereof: 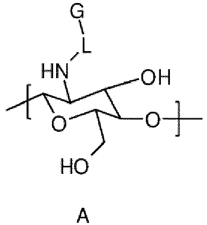 wherein L designates a divalent group and G designates a fatty alkyl chain comprising 5 to 30 carbon atoms, optionally substituted, saturated or unsaturated.
